# FASCICULE DE BREVET EUROPEEN

(11) **EP 3 847 363 B1**
(45) Date de publication et mention de la délivrance du brevet: **25.10.2023**
(21) Numéro de dépôt: 19786644.5
(22) Date de dépôt: 04.09.2019
(51) Int. Cl.: F02K 3/06, F02C 7/00, F01D 25/28, F16B 5/06, F16B 19/02

(54) **TURBOMACHINE A DOUBLE FLUX**
BYPASS-TURBOMASCHINE
BYPASS TURBOMACHINE

(30) Priorité: 05.09.2018 FR 1857974
(43) Date de publication de la demande: 14.07.2021
(73) Titulaire: SAFRAN AIRCRAFT ENGINES, 75015 Paris (FR)
(72) Inventeur: TESSIEREAU, Antonin, Etienne, Diego, 77550 MOISSY-CRAMAYEL (FR); MATHIAS, Cyrille, François, Antoine, 77550 MOISSY-CRAMAYEL (FR); BALK, Wouter, 77550 MOISSY-CRAMAYEL (FR)
(74) Mandataire: Ernest Gutmann - Yves Plasseraud S.A.S.
(86) Numéro de dépôt international: PCT/FR2019/052041
(87) Numéro de publication internationale: WO 2020/049256

(56) Documents cités:
- EP-A1- 3 178 801
- WO-A1-2016/184620
- FR-A1- 3 029 980
- US-A1- 2002 159 829

## Description

### DOMAINE/CONTEXTE

La présente invention concerne un ensemble pour turbomachine et destiné à délimiter une surface annulaire d'une veine annulaire d'air, en particulier une veine annulaire d'air secondaire. Les documents FR 3 029 980 A1 et EP 3 178 801 A1 montrent des systèmes de fixation de panneaux pour turbomachine selon l'art antérieur.

### CONTEXTE

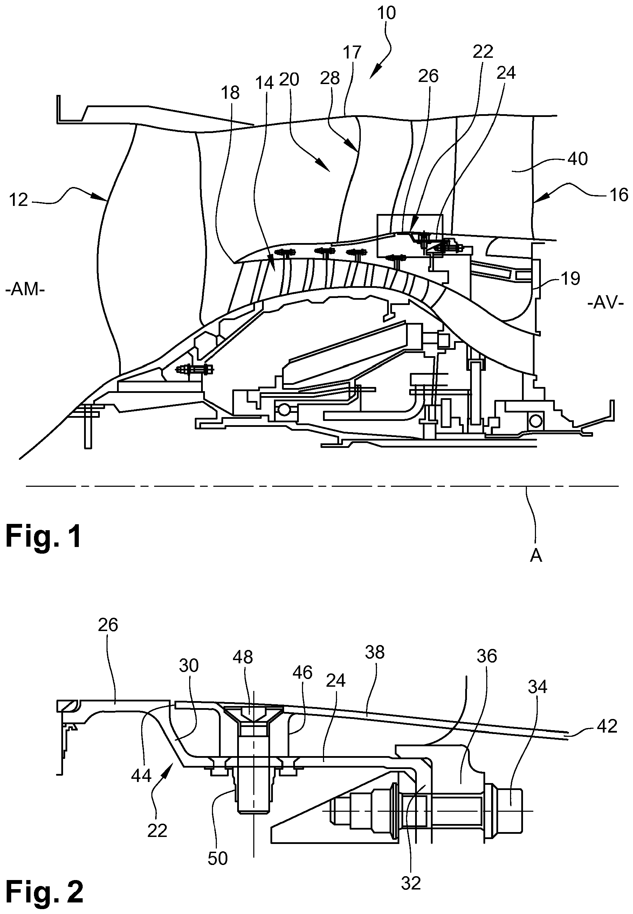

La figure 1 représente la partie amont d'une turbomachine 10 à double flux d'axe longitudinal A comprenant d'amont AM en aval AV, une roue de soufflante 12 amont, un compresseur basse pression 14 et un carter intermédiaire 16. Classiquement, le carter intermédiaire 16 est lié au carter de soufflante 17 par une bride annulaire radialement externe et au compresseur haute pression (non représenté) par une bride annulaire radialement interne au niveau de son moyeu 19. Le flux d'air entrant est séparé par un bec 18 annulaire en un flux d'air primaire entrant à l'intérieur du compresseur basse pression 14 et un flux d'air secondaire circulant autour du compresseur dans une veine annulaire d'air secondaire 20. Cette veine annulaire d'air secondaire 20 est délimitée radialement vers l'intérieur par une succession de parois annulaires ou d'éléments de parois annulaires.

En particulier, on observe la présence d'une virole 22 annulaire formée d'une première paroi 24 annulaire et d'une seconde paroi 26 annulaire. La seconde paroi 26 annulaire porte des aubes de stator 28 destinées à redresser le flux d'air sortant de la roue de soufflante 12. Comme représenté en figure 2, cette virole 22 annulaire comprend un décrochement 30 annulaire s'étendant radialement vers l'intérieur et se prolongeant vers l'aval par la première paroi annulaire 24 qui est de forme sensiblement cylindrique et qui est reliée à une bride 32 annulaire radiale de fixation par boulonnage 34 à une bride 36 annulaire du carter intermédiaire 16. Cette fixation directe de la virole 22 annulaire de support des aubages 28 de redressement au carter intermédiaire 16 assure une bonne transmission des efforts sur les aubes de stator 28 au carter intermédiaire 16 lequel assure une partie de la liaison mécanique de la turbomachine à l'avion.

Pour reconstituer une surface annulaire radialement interne d'écoulement de l'air pour la veine annulaire d'air secondaire au niveau du carter intermédiaire 16, une pluralité de panneaux 38 sont juxtaposés circonférentiellement les uns à la suite des autres entre des bras radiaux 40 du carter intermédiaire 16. Chaque panneau 38 comprend une extrémité aval 42 fixée par boulonnage au carter intermédiaire 16 et une extrémité amont 44 rendue solidaire de la première paroi 24 annulaire et prolongeant vers l'aval la seconde paroi 26 annulaire. La pluralité de panneaux 38 s'étendent ainsi en vis-à-vis radial de la paroi annulaire 24. Pour maintenir l'espacement entre l'extrémité amont 44 d'un panneau 38 et la première paroi 24 annulaire, il est connu de réaliser plusieurs bossages 46 sur la face radialement interne du panneau 38. Ces bossages 46 viennent en appui sur la face radialement externe de la première paroi 24. Ils sont chacun traversés depuis l'extérieur par une vis 48 vissée dans un écrou 50 riveté à la paroi annulaire.

Cette méthode de fixation s'avère très pratique à mettre en oeuvre mais souffre d'une difficulté majeure relative à la masse additionnelle nécessaire au bossage 46. Par ailleurs, la réalisation des panneaux 38 en métal s'avère également relativement lourde.

Une solution a été proposée et consiste à réaliser les panneaux 38 en matériau composite comprenant des fibres de carbone imprégnées de résine. En terme de masse, cela s'avère positif. Toutefois, la réalisation des bossages 46 augmente le temps de drapage. Par ailleurs, la mise en oeuvre s'avère complexe et la mise au point du moule de chauffage est également compliquée puisque le chauffage pour le thermodurcissage doit être maitrisé en tout point d'un bossage 46.

L'invention a ainsi pour but d'apporter une solution simple et efficace à ce problème.

### RESUME DE L'INVENTION

Le présent document concerne tout d'abord un ensemble pour turbomachine d'axe longitudinal comprenant une première paroi annulaire, des panneaux étant agencés autour de l'axe longitudinal et s'étendant en vis-à-vis radial de ladite première paroi annulaire de manière à former une surface d'écoulement d'un flux d'air, chaque panneau étant solidarisé à la première paroi annulaire par au moins un organe de fixation traversant un orifice du panneau et solidarisé à la première paroi annulaire, caractérisé en ce qu'une douille est insérée dans chaque orifice et comprend une première portion annulaire d'extrémité appliquée sur une face du pourtour de l'orifice opposée à la première paroi annulaire, l'organe de fixation serrant ladite première portion annulaire d'extrémité de la douille sur le pourtour de l'orifice, un plot formant une entretoise entourant la douille et étant serré radialement entre le pourtour de l'orifice et la première paroi annulaire.

Ainsi, le montage proposé permet de réaliser des panneaux dépourvus de bossages lesquels sont remplacés par des plots structurellement indépendants des panneaux. Les plots assurent la fixation à distance des panneaux sur la première paroi annulaire. On peut ainsi réaliser les panneaux en matériau composite à fibres de carbone noyées dans une matrice thermodurcissable telle qu'une résine époxy. La conception des panneaux suit alors un procédé de fabrication standard et simple sans nécessiter d'introduction d'une surépaisseur complexe et nécessitant un temps long de réalisation.

Par ailleurs, l'effort de serrage de chaque organe de fixation transite par la première portion annulaire d'extrémité de chaque douille dans le pourtour de l'orifice, dans le plot puis est transmis à la première paroi annulaire. Ainsi, lorsque le panneau est en composite comme indiqué précédemment, l'effort est alors bien réparti annulairement dans le pourtour de l'orifice et dans le plot, ce qui conduit à une bonne tenue mécanique et une bonne durée de vie de la fixation proposée.

Selon une autre caractéristique, chaque douille peut comprendre une seconde portion annulaire d'extrémité opposée à la première portion annulaire d'extrémité et agencée en vis-à-vis radial d'une surface correspondante du plot pour la retenue du plot sur le panneau.

Ce montage permet également d'assurer un blocage de chaque plot radialement entre la douille et un panneau. Ainsi, les plots peuvent être rendus solidaires du panneau lequel peut être manipulé avec le plot et les douilles pré-agencés au niveau de chaque orifice en vue d'une fixation à la première paroi annulaire.

Egalement, la douille peut comprendre une portion cylindrique de jonction de la première portion annulaire d'extrémité et de la seconde portion annulaire d'extrémité.

La seconde portion annulaire d'extrémité de la douille peut présenter une épaisseur de paroi inférieure à l'épaisseur de paroi de la portion cylindrique de manière à permettre la déformation par sertissage de la seconde portion annulaire d'extrémité servant à la retenue du plot. On entend par épaisseur de paroi, la dimension radiale de la paroi constituant l'un ou l'autre des éléments de la douille. Ainsi, pour réaliser le montage de la douille, celle-ci comprend initialement la première portion annulaire d'extrémité, la portion cylindrique et une seconde portion annulaire d'extrémité qui est cylindrique. On peut dès lors insérer la douille dans un orifice du panneau, monter le plot autour de la douille et enfin déformer la seconde portion annulaire d'extrémité par sertissage afin qu'elle assure un maintien du plot sur le panneau. Le panneau ainsi équipé du plot et de la douille peut être aisément manipulé et mis en place en regard de la première paroi annulaire.

Selon une autre caractéristique, chaque première portion annulaire d'extrémité d'une douille forme une jupe tronconique appliquée sur une partie tronconique du pourtour de l'orifice du panneau. De cette manière, lorsque les organes de fixation comprennent une tête, celle-ci peut être logée dans le renfoncement radial vers l'intérieur formée par la partie tronconique du pourtour de l'orifice et éviter d'être en saillie dans une veine annulaire d'air.

Egalement, la partie tronconique du pourtour de l'orifice du panneau se prolonge par un rebord annulaire cylindrique dont l'extrémité libre est agencée à distance du plot, la partie tronconique du pourtour du panneau étant serrée entre la première partie annulaire d'extrémité de la douille et le plot.

De cette manière, on assure que le contact entre le plot et le panneau est réalisé sur le pourtour de l'orifice et non au niveau de l'extrémité libre du cylindrique radial. Ainsi, la transmission des efforts de serrage se fait par l'intermédiaire de la partie du plot qui serre la partie tronconique.

La première portion annulaire d'extrémité et la seconde portion annulaire d'extrémité de la douille peuvent chacune former une jupe de forme sensiblement tronconique.

La douille et le plot peuvent être montés avec un jeu L en translation radiale relativement au panneau, L étant de l'ordre du dixième de millimètre.

En outre, l'ensemble décrit précédemment peut comprendre une virole annulaire formée de la première paroi annulaire agencée en aval d'une seconde paroi annulaire et reliée à celle-ci par un décrochement annulaire radial, chaque panneau étant agencé autour de l'axe longitudinal et s'étendant dans le prolongement aval de la seconde paroi annulaire amont de la virole annulaire de manière à délimiter une surface d'écoulement d'un flux d'air annulaire.

Le présent document concerne également une turbomachine à double flux comprenant un ensemble, dans lequel la seconde paroi annulaire porte des aubes de stator s'étendant radialement vers l'extérieur, la première paroi annulaire étant fixée à un carter intermédiaire sur lequel est également fixée l'extrémité aval de chaque panneau, la seconde paroi annulaire et les panneaux délimitant radialement vers l'intérieur une veine annulaire d'écoulement d'un flux d'air secondaire.

Aussi, chaque panneau peut être agencé circonférentiellement entre des bras radiaux du carter intermédiaire.

L'invention sera mieux comprise et d'autres détails, caractéristiques et avantages de l'invention apparaîtront à la lecture de la description suivante faite à titre d'exemple non limitatif en référence aux dessins annexés.

### BREVE DESCRIPTION DES FIGURES

- la figure 1, déjà décrite précédemment, est une vue schématique en coupe axiale de la partie amont d'une turbomachine ;
- la figure 2, déjà décrite précédemment, est une vue à plus grande échelle de la zone délimitée en pointillée sur la figure 1 ;
- la figure 3 est une vue schématique en perspective d'un ensemble selon l'invention ;
- la figure 4 est une vue schématique en coupe de la fixation d'un panneau à une première paroi annulaire dans l'ensemble tel que représenté en figure 3, l'organe de fixation n'étant pas visible;
- la figure 5 est une vue schématique en coupe de la fixation d'un panneau à une première paroi annulaire dans l'ensemble tel que représenté en figure 3, l'organe de fixation étant visible ;
- la figure 6 est une vue schématique en perspective en coupe similaire à la figure 4 ;
- la figure 7 est une vue schématique en coupe d'une douille montée sur un panneau dans un ensemble selon l'invention, la douille étant sertie sur le plot ;
- la figure 8 est une vue schématique en coupe d'une douille montée sur un panneau dans un ensemble selon l'invention, la douille n'étant pas sertie sur le plot.

### DESCRIPTION DETAILLEE

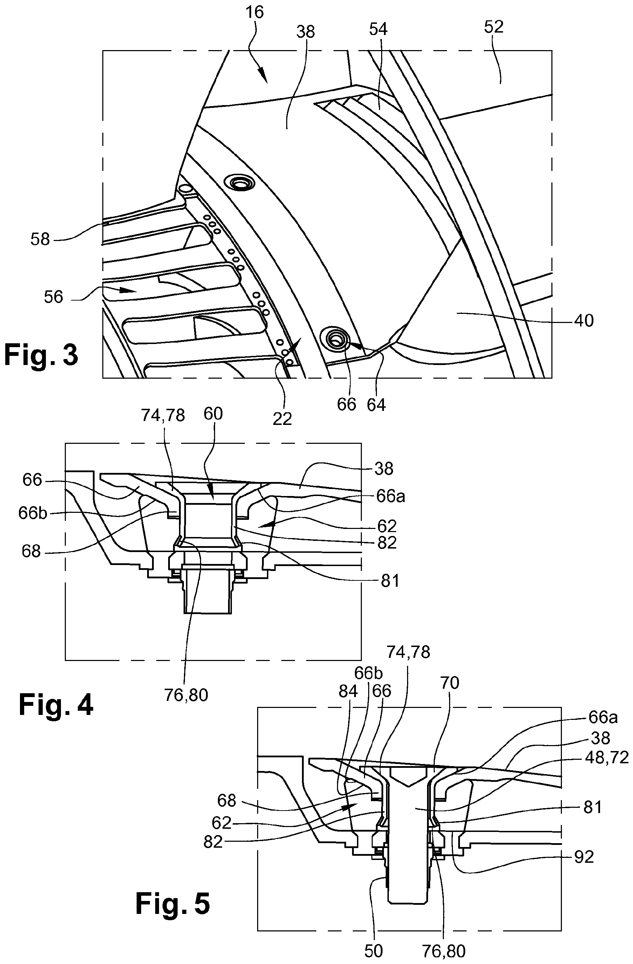

On se réfère tout d'abord à figure 3 qui représente un ensemble selon l'invention destiné à être montée dans une turbomachine 10. Plus particulièrement, la figure 3 représente un carter intermédiaire 16 qui est une pièce structurante de la turbomachine 10 et sert à la transmission des efforts de poussée de la turbomachine 10 à l'avion par l'intermédiaire d'un pylône.

Ce carter intermédiaire 16 comprend une virole annulaire interne (non représentée) depuis laquelle s'étend des bras 40 radiaux reliés à leurs extrémités radialement externes à une virole annulaire externe 52. En pratique, la virole annulaire interne est recouverte extérieurement par des panneaux 38 chacun intercalés circonférentiellement entre deux bras 40 radiaux du carter intermédiaire 16. Chaque panneau 38 comprend des ouvertures ou fentes 54 formées dans sa partie aval pour le passage d'air depuis la veine annulaire d'air primaire, ce qui est bien connu de l'homme du métier.

Une virole 22 annulaire amont permet le support d'aubes de stator 28 servant au redressement de l'air sortant d'une soufflante 12 amont comme décrit en référence à la figure 1. Cette virole 22 annulaire comprend une première paroi 24 annulaire aval reliée à une seconde paroi 26 annulaire amont par un décrochement 30 annulaire radial. La seconde paroi 26 annulaire amont comprend des ouvertures 56 oblongues en direction longitudinale A et chacune traversée par une embase 58 de fixation d'une aube statorique 28 de redressement du flux d'air. L'extrémité aval de la première paroi 24 annulaire aval est fixée par boulonnage 34 à la virole annulaire interne du carter intermédiaire 16.

Comme cela est bien visible sur les figures 4 et 5, l'extrémité amont de chaque panneau 38 est fixée à la première paroi 24 annulaire de la virole 22 annulaire amont et s'étend dans le prolongement aval de la seconde paroi 26 annulaire afin de reconstituer une surface annulaire radialement interne d'écoulement d'un flux d'air secondaire.

A cette fin, il est nécessaire que chaque panneau 38 soit agencé à une distance prédéterminé de la première paroi annulaire 24. Cela peut s'avérer difficile à réaliser lorsque les panneaux sont réalisés en matériau composite à fibres de carbone noyées dans une matrice de résine thermodurcissable, telle que de l'époxy.

L'invention propose ainsi de réaliser la fixation de chaque panneau 38 à la première paroi annulaire 24 radial par l'intermédiaire d'une douille 60 et d'un plot 62 agencé selon une configuration spécifique de manière à avoir une bonne transmission des efforts.

Ainsi, chaque panneau 38 comprend une pluralité d'orifices 64 dont le pourtour présente une partie de forme sensiblement tronconique 66 évasée radialement vers l'extérieur et se prolongeant à son extrémité radialement interne par un rebord annulaire cylindrique d'axe sensiblement radial 68. La partie tronconique 66 du pourtour de l'orifice 64 permet de loger la tête 70 d'un organe de fixation 72 tel qu'une vis 48 afin que celui-ci ne soit pas agencé en saillie dans la veine annulaire d'air secondaire 20.

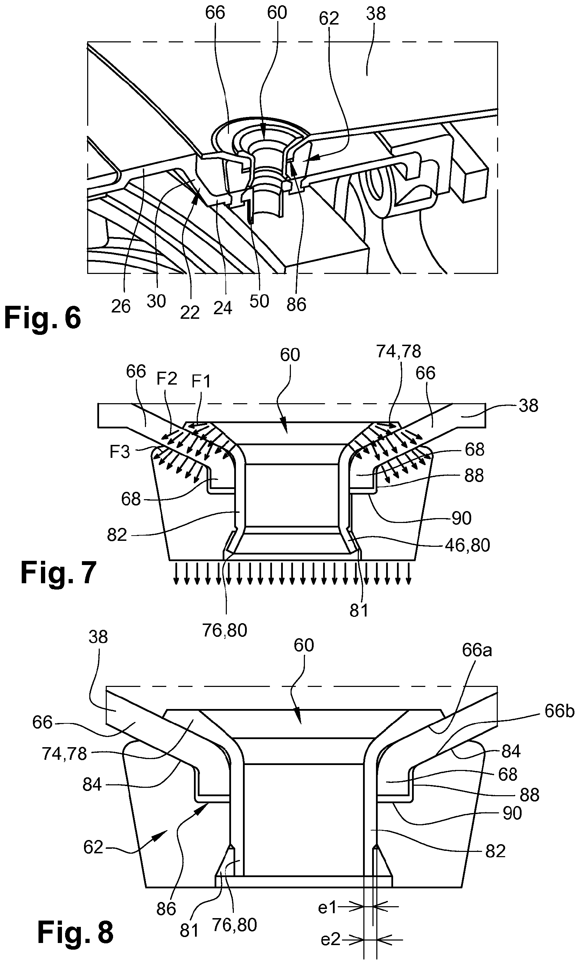

Une douille intermédiaire 60 est montée dans chaque orifice 64 et comprend une première portion 74 annulaire d'extrémité agencée au niveau d'une extrémité radialement externe de la douille 60 et une seconde portion 76 annulaire d'extrémité agencée à l'opposé de la première portion 74 annulaire d'extrémité et donc agencée en position dans la turbomachine radialement à l'extrémité interne de la douille 60. La première portion 74 annulaire d'extrémité et la seconde portion 76 annulaire d'extrémité présentent dans la réalisation représentée aux figures 4 à 8 la forme d'une jupe 78, 80 tronconique s'évasant, respectivement, radialement vers l'extérieur et radialement vers l'intérieur. La première portion 74 annulaire d'extrémité et la seconde portion 76 annulaire d'extrémité sont reliées l'une à l'autre par une portion 82 annulaire cylindrique. On observe que la seconde portion 76 annulaire d'extrémité de la douille 60 présente une épaisseur e1 de paroi inférieure à l'épaisseur e2 de paroi de la portion 82 cylindrique de manière à permettre la déformation par sertissage de la seconde portion 76 annulaire d'extrémité servant à la retenue du plot 62. Cette différence d'épaisseur est mieux visible sur la figure 8 représentant la douille 60 avant le sertissage et également sur la figure 7 qui représente la douille 60 après sertissage.

La première portion 74 annulaire d'extrémité de la douille 60 est appliquée sur la face radialement externe 66a du pourtour de l'orifice 64, et plus précisément sur la face radialement externe 66a de la partie tronconique 66 du pourtour de l'orifice 64.

Au niveau de chaque orifice 64, un plot 62 est monté autour d'une douille 60 et radialement entre un panneau 38 et la première paroi 24 annulaire radiale. Ce plot 62 est traversé par la douille 60 et maintenu par celle-ci solidaire d'un panneau 38. Ce plot 62 comprend une face annulaire radialement externe 84 de forme sensiblement complémentaire à la face radialement interne 66b de la partie tronconique 66 du pourtour de l'orifice 64 du panneau 38. Dans le cas présent, cette face annulaire radialement externe 84 du plot 62 est de forme tronconique à section augmentant radialement vers l'extérieur. On observe que le plot 62 présente un logement annulaire ou lamage 86 entourant la douille 60 et recevant le rebord cylindrique 88 du pourtour de l'orifice 64. L'extrémité libre du rebord cylindrique 68 du pourtour de l'orifice 64 est agencée à distance, c'est-à-dire sans contact avec le fond 90 du renfoncement de manière à ce que l'appui du plot 62 sur le pourtour de l'orifice 64 soit réalisé au niveau de la face annulaire radialement externe 84 du plot 62 et non au niveau de l'extrémité libre du rebord cylindrique 88 du pourtour de l'orifice 64. Le plot 62 comprend une surface annulaire sensiblement plane 92 et appliquée sur une face radialement externe de la première paroi 24 annulaire de la virole 22 annulaire amont.

Comme cela est bien visible sur les figures 4, 5 et 7, la seconde jupe 80 tronconique de la douille 60 est agencée en vis-à-vis radial d'une surface annulaire 81 correspondante du plot 62, ici également de forme tronconique, de manière à assurer une rétention radiale du plot 62 sur le panneau 38. De cette manière, il est possible de préinstaller la douille 60 et le plot 62 sur le panneau 38 en rendant ces trois pièces solidaires les unes des autres afin de permettre une manipulation simple du panneau 38.

Comme illustré en figure 8, la douille 60 est installée de manière à ce que sa première jupe tronconique 78 vienne en appui sur la face radialement externe de la partie tronconique 66 du pourtour de l'orifice 64, la seconde portion 76 annulaire de la douille 60 présentant alors une forme sensiblement cylindrique nécessaire à l'introduction de la douille 60 dans l'orifice 64 du panneau 38. Le plot 62 est ensuite monté autour de la douille 60 et on réalise le sertissage de la seconde portion 76 annulaire de manière à former une jupe 80 tronconique comme cela a été décrit précédemment.

La seconde jupe 80 tronconique peut présenter une ouverture angulaire d'environ 60°. La première jupe 78 tronconique peut présenter une ouverture angulaire supérieure à l'ouverture angulaire de la seconde jupe 80 tronconique, laquelle peut être de l'ordre de 100° à 130° (figures 4, 5 et 7).

Plus spécifiquement, le montage et le sertissage de la douille 60 sur le plot 62 sont réalisés de manière à ce que la douille présente un jeu en direction radial relativement au panneau 38 d'environ un dixième de millimètre lorsque le plot est en appui sur la face radialement interne de la paroi tronconique 66 du panneau 38. De cette manière on limite les contraintes mécaniques appliquées au panneau 38 et plus particulièrement au niveau du pourtour de l'orifice 64 du panneau 38 et également au plot 62 après sertissage de la douille 60. En pratique, on réalise le sertissage de manière à avoir un espace annulaire entre la seconde portion 76 annulaire ou jupe tronconique 80 et la surface annulaire 81 du plot (figure 7).

Lorsque le panneau 38 est pourvu des douilles 60 et des plots 62, celui-ci est monté en vis-à-vis radial de la première paroi 24 annulaire et on insère les vis 48 dans les douilles 60, la tête 70 d'une vis venant s'appliquer sur la première jupe 78 tronconique et son extrémité opposée est vissée dans un écrou 50 serti sur la première paroi 24 annulaire (figure 5).

La figure 7 comprend une pluralité de flèches F1, F2, F3 qui représente l'effort de serrage appliqué au panneau 38 dont on observe qu'il transite dans et est réparti sur toute la partie tronconique 66 du pourtour de l'orifice 64, puis passe le plot 62 au travers de la surface tronconique 84 de celui-ci et est ensuite transmis à la première paroi 24 annulaire.

La douille 60 peut être réalisée en matériau métallique et le plot 62 peut être réalisé dans une résine thermodurcissable.

## Revendications

1. Ensemble pour turbomachine (10) d'axe longitudinal (A) comprenant une première paroi (24) annulaire, des panneaux (38) étant agencés autour de l'axe longitudinal (A) et s'étendant en vis-à-vis radial de ladite première paroi annulaire (24) de manière à former une surface d'écoulement d'un flux d'air, chaque panneau (38) étant solidarisé à la première paroi (24) annulaire par au moins un organe de fixation (72) traversant un orifice (64) du panneau (38) et solidarisé à la première paroi (24) annulaire, **caractérisé en ce qu'**une douille (60) est insérée dans chaque orifice (64) et comprend une première portion (74) annulaire d'extrémité appliquée sur une face (66a) du pourtour de l'orifice (64) opposée à la première paroi (24) annulaire, l'organe de fixation (72) serrant ladite première portion (74) annulaire d'extrémité de la douille (60) sur le pourtour de l'orifice (64), un plot (62) formant une entretoise entourant la douille (60) et étant serré radialement entre le pourtour de l'orifice (64) et la première paroi (24) annulaire.

2. Ensemble selon la revendication 1, dans lequel chaque douille (60) comprend une seconde portion (76) annulaire d'extrémité opposée à la première portion (74) annulaire d'extrémité et agencée en vis-à-vis radial d'une surface (84) correspondante du plot (62) pour la retenue du plot (62) sur le panneau (38).

3. Ensemble selon la revendication 2, dans lequel la douille (60) comprend une portion cylindrique (82) de jonction de la première portion (74) annulaire d'extrémité et de la seconde portion (76) annulaire d'extrémité.

4. Ensemble selon l'une des revendications 1 à 3, dans lequel chaque première portion (74) annulaire d'une douille (60) forme une jupe (78) tronconique appliquée sur une partie tronconique (66) du pourtour de l'orifice (64) du panneau (38).

5. Ensemble selon la revendication 4, dans lequel la partie tronconique (66) du pourtour de l'orifice (64) du panneau (38) se prolonge par un rebord annulaire cylindrique (68) dont l'extrémité libre est agencée à distance du plot (62), la partie tronconique (66) du pourtour du panneau (38) étant serrée entre la première partie (74) annulaire d'extrémité de la douille (60) et le plot (62).

6. Ensemble selon l'une des revendications précédentes, dans lequel la première portion (74) annulaire d'extrémité et la seconde portion (76) annulaire d'extrémité de la douille (60) forment des jupes (78, 80) sensiblement tronconiques.

7. Ensemble selon l'une des revendications précédentes, dans lequel la douille (60) et le plot (62) sont montés avec un jeu en translation radiale relativement au panneau, ce jeu étant de l'ordre du dixième de millimètre.

8. Ensemble selon l'une des revendications 1 à 7, dans lequel les panneaux (38) sont réalisés en matériau composite comprenant des fibres de carbone noyées dans une matrice thermodurcissable, telle que de l'époxy.

9. Ensemble selon l'une des revendications précédentes, dans lequel il comprend une virole (22) annulaire formée de la première paroi (24) annulaire agencée en aval d'une seconde paroi (26) annulaire et reliée à celle-ci par un décrochement (30) annulaire radial, chaque panneau (38) étant agencé autour de l'axe longitudinal (A) et s'étendant dans le prolongement aval de la seconde paroi (26) annulaire amont de la virole (22) annulaire de manière à délimiter une surface d'écoulement d'un flux d'air annulaire.

10. Turbomachine (10) à double flux comprenant un ensemble selon la revendication 9, dans lequel la seconde paroi (26) annulaire porte des aubes de stator (28) s'étendant radialement vers l'extérieur, la première paroi (24) annulaire étant fixée à un carter intermédiaire (16) sur lequel est également fixée l'extrémité aval de chaque panneau (38), la seconde paroi (26) annulaire et les panneaux (38) délimitant radialement vers l'intérieur une veine annulaire (20) d'écoulement d'un flux d'air secondaire.

11. Turbomachine (10) selon la revendication 10, dans lequel chaque panneau (38) est agencé circonférentiellement entre des bras (40) radiaux du carter intermédiaire (16).

## Patentansprüche

1. Anordnung für ein Turbotriebwerk (10) mit einer Längsachse (A), enthaltend eine erste ringförmige Wand (24), wobei Paneele (38) um die Längsachse (A) herum angeordnet sind und sich der ersten ringförmigen Wand (24) radial gegenüberliegend erstrecken, so dass sie eine Strömungsfläche für einen Luftstrom bilden, wobei jedes Paneel (38) mit der ersten ringförmigen Wand (24) durch zumindest ein Befestigungsorgan (72) fest verbunden ist, das eine Öffnung (64) des Paneels (38) durchquert und mit der ersten ringförmigen Wand (24) fest verbunden ist,
**dadurch gekennzeichnet, dass** eine Hülse (60) in jede Öffnung (64) eingesetzt ist und einen ersten ringförmigen Endabschnitt (74) umfasst, der an einer der ersten ringförmigen Wand (24) gegenüberliegenden Seite (66a) des Umfangs der Öffnung (64) angebracht ist, wobei das Befestigungsorgan (72) den ersten ringförmigen Endabschnitt (74) der Hülse (60) auf dem Umfang der Öffnung (64) festklemmt, wobei ein Klotz (62) einen Abstandshalter bildet, der die Hülse (60) umgibt und radial zwischen dem Umfang der Öffnung (64) und der ersten ringförmigen Wand (24) eingeklemmt ist.

2. Anordnung nach Anspruch 1,
wobei jede Hülse (60) einen zweiten ringförmigen Endabschnitt (76) aufweist, der dem ersten ringförmigen Endabschnitt (74) entgegengesetzt ist und einer entsprechenden Oberfläche (84) des Klotzes (62) radial gegenüberliegend angeordnet ist, um den Klotz (62) am Paneel (38) zu halten.

3. Anordnung nach Anspruch 2,
wobei die Hülse (60) einen zylindrischen Abschnitt (82) zur Verbindung des ersten ringförmigen Endabschnitts (74) und des zweiten ringförmigen Endabschnitts (76) aufweist.

4. Anordnung nach einem der Ansprüche 1 bis 3,
wobei jeder erste ringförmige Abschnitt (74) einer Hülse (60) eine kegelstumpfförmige Schürze (78) bildet, die an einem kegelstumpfförmigen Abschnitt (66) des Umfangs der Öffnung (64) des Paneels (38) anliegt.

5. Anordnung nach Anspruch 4,
wobei der kegelstumpfförmige Abschnitt (66) des Umfangs der Öffnung (64) des Paneels (38) in eine zylindrische ringförmige Randkante (68) übergeht, deren freies Ende in einem Abstand von dem Klotz (62) angeordnet ist, wobei der kegelstumpfförmige Abschnitt (66) des Umfangs des Paneels (38) zwischen dem ersten ringförmigen Endabschnitt (74) der Hülse (60) und dem Klotz (62) eingeklemmt ist.

6. Anordnung nach einem der vorhergehenden Ansprüche,
wobei der erste ringförmige Endabschnitt (74) und der zweite ringförmige Endabschnitt (76) der Hülse (60) im Wesentlichen kegelstumpfförmige Schürzen (78, 80) bilden.

7. Anordnung nach einem der vorhergehenden Ansprüche,
wobei die Hülse (60) und der Klotz (62) mit einem radialen Verschiebungsspiel in Bezug auf das Paneel gelagert sind, wobei dieses Spiel in der Größenordnung von Zehntelmillimetern liegt.

8. Anordnung nach einem der Ansprüche 1 bis 7,
wobei die Paneele (38) aus einem Verbundmaterial hergestellt sind, das Kohlenstofffasern umfasst, die in eine wärmehärtende Matrix, wie etwa Epoxid, eingebettet sind.

9. Anordnung nach einem der vorhergehenden Ansprüche,
wobei sie einen ringförmigen Mantel (22) umfasst, der aus der ersten ringförmigen Wand (24) gebildet wird, die stromabwärts einer zweiten ringförmigen Wand (26) angeordnet und mit dieser durch einen radialen ringförmigen Absatz (30) verbunden ist, wobei jedes Paneel (38) um die Längsachse (A) angeordnet ist und sich in der stromabwärtigen Verlängerung der zweiten ringförmigen Wand (26) stromaufwärts des ringförmigen Mantels (22) erstreckt, um so eine Strömungsfläche für einen ringförmigen Luftstrom zu begrenzen.

10. Mantelstrom-Turbotriebwerk (10) mit einer Anordnung nach Anspruch 9,
wobei die zweite ringförmige Wand (26) radial nach außen ragende Statorschaufeln (28) trägt, wobei die erste ringförmige Wand (24) an einem Zwischengehäuse (16) befestigt ist, an dem auch das stromabwärtige Ende jedes Paneels (38) befestigt ist, wobei die zweite ringförmige Wand (26) und die Paneele (38) radial nach innen einen ringförmigen Strömungskanal (20) für einen Sekundärluftstrom begrenzen.

11. Turbotriebwerk (10) nach Anspruch 10,
wobei jedes Paneel (38) in Umfangsrichtung zwischen radialen Armen (40) des Zwischengehäuses (16) angeordnet ist.

## Claims

1. Assembly for a turbomachine (10) of longitudinal axis (A) comprising a first annular wall (24), panels (38) being arranged around the longitudinal axis (A) and extending radially opposite said first annular wall (24) so as to form a flow surface for a flow of air, each panel (38) being fixed to the first annular wall (24) by at least one fixing member (72) passing through an orifice (64) in the panel (38) and fixed to the first annular wall (24), **characterized in that** a sleeve (60) is inserted in each orifice (64) and comprises a first annular end portion (74) applied to a face (66a) of the periphery of the orifice (64) opposite the first annular wall (24), the fixing member (72) clamping said first annular end portion (74) of the sleeve (60) to the periphery of the orifice (64), a stud (62) forming a spacer surrounding the sleeve (60) and being clamped radially between the periphery of the orifice (64) and the first annular wall (24).

2. The assembly according to claim 1, wherein each sleeve (60) comprises a second annular end portion (76) opposite to the first annular end portion (74) and arranged radially opposite a corresponding surface (84) of the stud (62) for retaining the stud (62) on the panel (38).

3. The assembly according to claim 2, wherein the sleeve (60) comprises a cylindrical portion (82) for joining the first annular end portion (74) and the second annular end portion (76).

4. The assembly according to one of claims 1 to 3, in which each first annular portion (74) of a sleeve (60) forms a frustoconical skirt (78) applied to a frustoconical part (66) of the periphery of the orifice (64) of the panel (38).

5. The assembly according to claim 4, in which the frustoconical part (66) of the periphery of the orifice (64) of the panel (38) is extended by a cylindrical annular rim (68) whose free end is arranged at a distance from the stud (62), the frustoconical part (66) of the periphery of the panel (38) being clamped between the first annular end part (74) of the sleeve (60) and the stud (62).

6. The assembly according to one of the preceding claims, in which the first annular end portion (74) and the second annular end portion (76) of the sleeve (60) form substantially frustoconical skirts (78, 80).

7. The assembly according to one of the preceding claims, in which the sleeve (60) and the stud (62) are mounted with a clearance in radial translation relative to the panel, this clearance being of the order of a tenth of a millimeter.

8. The assembly according to any one of claims 1 to 7, wherein the panels (38) are made of a composite material comprising carbon fibers embedded in a thermosetting matrix, such as epoxy.

9. The assembly according to one of the preceding claims, in which it comprises an annular shroud (22) formed by the first annular wall (24) arranged downstream of a second annular wall (26) and connected to the latter by a radial annular step (30), each panel (38) being arranged around the longitudinal axis (A) and extending in the downstream extension of the second upstream annular wall (26) of the annular shroud (22) so as to delimit a flow surface for an annular air flow.

10. A bypass turbomachine (10) comprising an assembly according to claim 9, in which the second annular wall (26) carries radially outwardly extending stator vanes (28), the first annular wall (24) being fixed to an intermediate casing (16) to which the downstream end of each panel (38) is also fixed, the second annular wall (26) and the panels (38) delimiting radially inwardly an annular flow path (20) for a secondary air flow.

11. A turbomachine (10) according to claim 10, wherein each panel (38) is arranged circumferentially between radial arms (40) of the intermediate casing (16).
